# EUROPEAN PATENT SPECIFICATION

(11) **EP 0 339 134 B1**
(45) Date of publication and mention of the grant of the patent: **03.02.1993**
(21) Application number: 88119897.2
(22) Date of filing: 29.11.1988
(51) Int. Cl.: B65B 57/10, B65B 9/06

(54) **Packaging machine with a packaging article inclusion-proofing device for end-sealing mechanism**
Verpackungsmaschine mit einer Einrichtung zur Verhinderung des Einklemmens zu verpackender Gegenstände in einen Endversiegelungsmechanismus
Machine d'empaquetage avec un mécanisme pour éviter le coinçage des articles à compaqueter dans une installation de scellage

(30) Priority: 26.04.1988 JP 56097/88
(43) Date of publication of application: 02.11.1989
(73) Proprietor: FUJI MACHINERY CO., LTD., Nagoya Aichi (JP)
(72) Inventor: Seko, Kiyoshi c/o NAGOYA FACTORY of, Nishi-ku Nagoya Aichi (JP); Hatano, Masato c/o NAGOYA FACTORY of, Nishi-ku Nagoya Aichi (JP); Suzuki, Shigeki c/o NAGOYA FACTORY of, Nishi-ku Nagoya Aichi (JP)
(74) Representative: Prüfer, Lutz H., Dipl.-Phys.

(56) References cited:
- EP-A- 0 230 986
- US-A- 4 574 566
- US-A- 4 722 168

## Description

This invention relates to a packaging machine with a packaging article inclusion-proofing device for an end-sealing mechanism. More particularly, this invention relates to a packaging article inclusion-proofing device for an end-sealing mechanism which is designed to prevent effectively inconvenience of inclusion of packaging articles (articles to to be packaged) by the end-sealing mechanism which may be caused by the deviation of the packaging articles from their regular positions within a tubular packaging material in a bag-making/packing/packaging machine in which packaging articles are fed into a packaging material being fed out into a form of tube, and then center-sealing and end-sealing are applied to the above packaging material to successively produce packages.

There has widely been known a horizontal bag-making/packing/packaging machine in which, while packaging articles are successively fed into a packaging material such as a film and the like being fed out horizontally into a form of tube through a bag-making device, and the longitudinal end portions of the tubular packaging material containing the packaging articles are subjected to lengthwise sealing on the overlapping faces, followed by crosswise sealing and cutting of the tubular packaging material on both sides of each packaging article to produce oblong pillow type packages successively. In this connection, the above longitudinal sealing is generally referred to as "center sealing"; whereas the crosswise sealing, "end sealing", and these latter mentioned terms will be used hereinafter, respectively.

The horizontal bag-making/packing/packaging machine mentioned above has various types of working mechanisms such as a conveyor for feeding packaging articles, feed rolls for delivering a packaging material, rolls for achieving center sealing, sealers for achieving end-sealing for the packaging material and others. The driving system in the packaging machine described above has one main motor as a common driving source and is designed to drive a number of working mechanisms mentioned above in connection with one another through mechanical power transmission systems, respectively, using this motor.

As described above, when the tubular packaging material containing packaging articles is end-sealed on both sides of each packaging article, it is necessary that the packaging articles be arranged at regular positions relative to the timing of sealing to be effected by the end-sealing mechanism. Generally, the packaging araticles are fed by the conveyor disposed upstream into the tubular packaging material to be fed out downstream unit by unit at a predetermined feed timing in synchronization with the seal timing of the end-sealing mechanism. Accordingly, the packaging articles are arranged in the tubular packaging material at regular positions relative to the seal timing.

Therefore, in a horizontal bag-making/packing/packaging machine, it frequently happens that the packaging articles contained in the tubular packaging material deviate from their regular positions relative to the seal timing due to various factors such as vibration to be generated during the operation of the packaging machine, conditions to be provided by the shape of the packaging article, difference between the coefficient of friction of the packaging article and that of the tubular packaging material, errors in the timing of feeding the packaging article, and so on. Thus, if the packaging article should deviate from the regular position within the tubular packaging material, the sealers provided in the end-sealing mechanism are interfered through contact with the packaging article when the packaging article is passed through the end-sealing mechanism to effect end-sealing and cutting, resulting in defective articles in the packages obtained.

Accordingly, in a packaging machine having a purely mechanical constitution, for example, as shown in Japanese Patent Publication No. 160209/1983, there is employed a constitution wherein "a clutch and a clutch brake are attached, respectively, to a pair of end-sealer shafts disposed in a vertical relationship, so that the clutch may be put off when a detector should detect deviation of an packaging article, whereby the brake is actuated to stop the end sealers".

However, the packaging machine having the above-mentioned constitution involves problems that great mechanical shock is produced when the end-sealing mechanism is stopped or started by the clutch on/off operation, and that response to the detection of the deviation to stop the sealers is slow, and the like. For such reasons, in the packaging machine, the above constitution was not applicable unless the machine is operated at a low speed of about 20 rpm.

In the packaging machine disclosed in document US-A-4,722,168, an out-of-registration of an article in the tubular packaging material is detected by a photo transmitter and upon such detection the end-sealing mechanism as well as the conveyor for feeding articles into the tubular packaging material is stopped and the tubular packaging material is completely cleared of packaging articles. Hence, there is a considerable interruption of the operation of the apparatus whenever an out-of-registration is detected.

It is the object of the present invention to provide a packing machine with a packaging article inclusion-proofing device which overcomes the drawbacks of the aforementioned prior art and which can effectively and with a minimum interruption of the operation prevent inclusion of packaging articles in the end-sealing mechanism when one or more packaging articles should deviate from the regular position relative to the seal timing in the course of the transportation of the packaging articles having been packed in the tubular packaging material towards the end-sealing mechanism. Further, this shall be achieved even on the high-speed operation of the packaging machine.

For the purpose of achieving the aforementioned object of the invention, the invention provides a packaging machine with a packaging article inclusion-proofing device having the features of claim 1.

As has been described above, according to the packaging machine of this invention, the motor for driving the end-sealing mechanism is adapted to be stopped with gradual deceleration after waiting for a necessary number of shifts when packaging articles contained in a tubular packaging material should deviate from the regular positions in the course of their transportation toward the end-sealing mechanism, and then started with gradual acceleration after stopping for a period corresponding to the number of cycles, i.e. the number of deviated packaging articles. For example, even in a packaging machine which is operated at a high speed of about 200 rpm, inclusion of packaging articles by the end-sealing mechanism can effectively be prevented. Moreover, the sealers in the end-sealing mechanism are controlled so that they may stop at positions completely separated from the packaging material, whereby burning of the packaging material can effectively be prevented. While the motor is gradually decelerated when it is to be stopped, it is gradually accelerated after it is started, whereby deviation of packaging articles from the regular position which may be caused by the mechanical vibration and the like can be obviated even during high-speed operation.
Fig. 1 shows a block diagram illustrating an example of a control circuit to be employed in the packaging article inclusion-proofing device according to the embodiment of this invention;
Fig. 2 illustrates schematically the state of the sealers in the end-sealing mechanism stopping at positions where they are free from interference with the tubular packaging material;
Fig. 3 shows a timing chart of deviation timing signals vs. deviation detection signals;
Figs. 4, 5 and 6 each are an illustration of timing showing a state of deviated packaging articles relative to the deviation timing signals;
Fig. 7 shows a flow chart of a packaging article inclusion-proofing device according to the embodiment; and
Fig. 8 shows a schematic constitution where the packaging article inclusion-proofing device according to the embodiment is employed in a triple motor-driven horizontal bag-making/packing/packaging machine.

Next, the packaging article inclusion-proofing device for an end-sealing mechanism according to this invention will be described by way of suitable embodiment referring to the attached drawings.

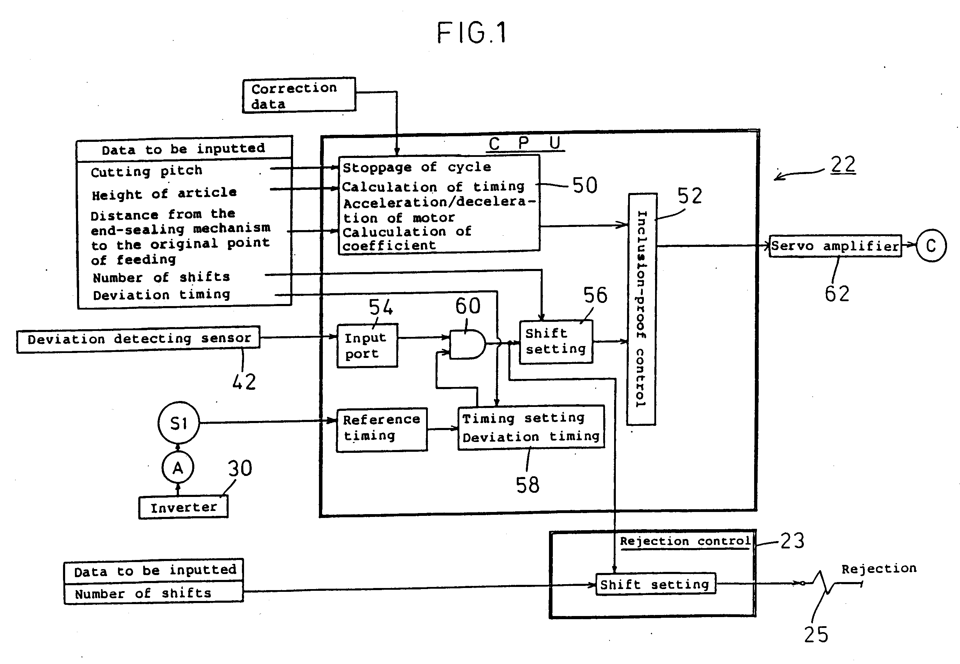

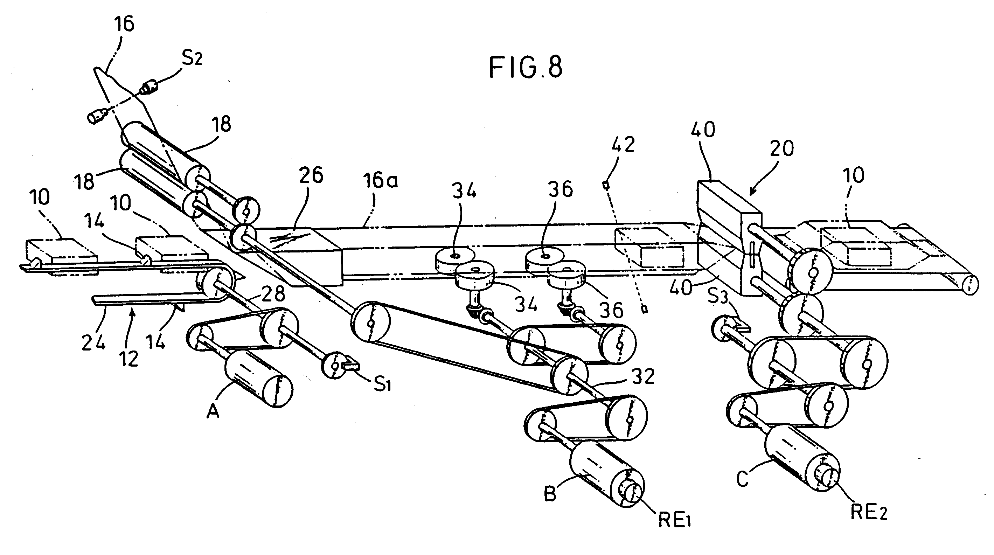

Fig. 8 shows an embodiment where the packaging article inclusion-proofing device according to this invention is employed in a triple motor-driven horizontal bag-making/packing/packaging machine. This packaging machine essentially comprises a motor A for driving a conveyor 12 for feeding packaging articles (articles to be packaged) 10, a servomotor B for driving rolls (feed rolls) 18 for delivering a packaging material 16 and a servomotor C for driving an end-sealing mechanism 20. The conveyor 12 is composed of an endless chain 24 and a plurality of attachments 14 fixed thereon with a predetermined space, so that the packaging articles 10 carried thereon under engagement with the attachments 14 may be fed into the packaging material 16 being formed into a tube through a bag-making device 26 disposed downstream the conveyor. The conveyor 12 is driven by the motor A through a sprocket-chain transmission system provided for a drive shaft 28 as shown in Fig. 8. The above motor A is, for example, an AC induction motor and it is controlled to be operated at variable speed by a variable speed controller 30 such as an inverter as shown in Fig. 1 and the like.

A reference timing pulse generating means S₁ typified by a rotary encoder is provided for the above drive shaft 28. This reference timing pulse generating means S₁ generates pulses as a predetermined reference timing for the timing of feeding packaging articles 10 unit by unit from the feed conveyor 12 with a predetermined interval downstream to the tubular packaging material 16. In this process, the pitch at which each of the packaging articles 10 is fed into the tubular packaging material 16 constitutes one cycle, which corresponds to a full rotation of 360° in the above rotary encoder. Accordingly, the present location of the packaging article 10 being transported on the conveyor 12 can be known by converting the number of pulses generated by the rotary encoder into angle.

The sheet-form packaging material 16 delivered from a feed source (not shown) comprising a roll of sheet is supported between the above pair of feed rolls 18 to be delivered toward the bag-making device 26 disposed downstream the conveyor 12. The packaging material 16 having been formed into a tubular bag 16a through this bag-making device 26 is fed downstream with the overlapping faces along the longitudinal end portions thereof being supported between a pair of feed rolls 34. Further, a pair of heat-sealing rolls 36 are provided to effect center-sealing of the above overlapped both end portions of the packaging material 16 by pressing it therebetween as it is fed.

The above pair of feed rolls 18 are driven by the servomotor B through a belt-pulley transmission system as illustrated in Fig. 8. The power of the servomotor B is diverged through a drive shaft 32 to synchronously drive said pair of feed rolls 34 and the heat-sealing rolls 36. Revolution of the servomotor B is constantly detected by a rotary encoder RE₁ to effect servo-actuated control of the servomotor B by feeding back the number of revolution to the control circuit.

Further, in the end-sealing mechanism 20 disposed downstream, a pair of rotary sealers 40 are disposed to oppose each other in a vertical relationship which are driven by the servomotor C through a belt-pulley transmission system to achieve ununiform motion. This servomotor C is also constantly detected for its revolution by a rotary encoder RE₂ to effect servo-actuated control of the servomotor C. As the sealers 40, there may suitably be employed, in place of the rotary sealing mechanism according to this embodiment, a so-called block motion system sealing mechanism in which sealers are moved horizontally and synchronously along the line of feeding the tubular bag 16a, ascended to be spaced from the tubular bag 16a and retracted horizontally from each other, and then descended again for horizontal motion.

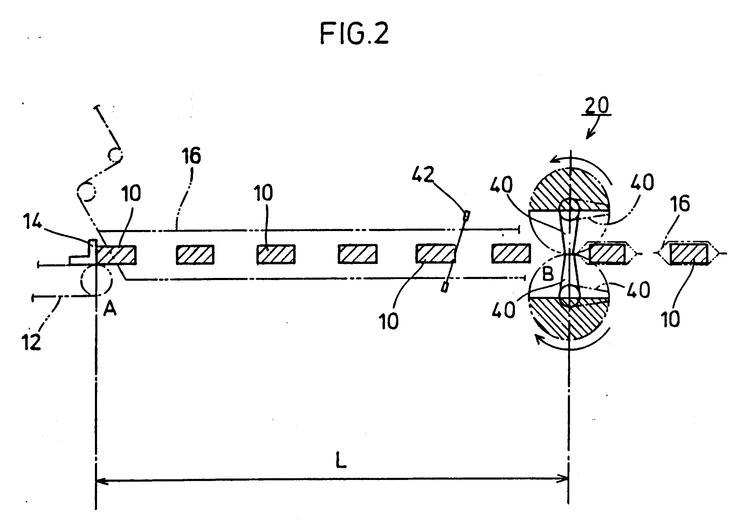

As shown in Figs. 2 and 8, a deviation detecting sensor 42 is disposed upstream the end-sealing mechanism 20, which detects deviation of the packaging articles 10 contained in the tubular bag 16a, when the packaging articles 10 should deviate from the regular positions relative to the seal timing of the end-sealing mechanism 20. Incidentally, when the pitch between any two attachments 14 disposed on the conveyor 12 is designed to accept packaging articles 10 having different lengths, a constitution is preferred wherein the position of disposing the deviation detecting sensor 42 is adjustable or the deviation detecting sensor 42 is disposed so that it may detect deviation of a largest possible packaging article 10, and corrections in numerical values can be achieved in the control circuit 22 to be described later.

Identification of the deviation by the deviation detecting sensor 42 is achieved by detecting a state where the packaging articles 10 being forwarded as inserted in the tubular bag 16a have not been arranged in regular positions, respectively, relative to the seal timing of the end-sealing mechanism 20 to output deviation detection signals to the control circuit 22 to be described later. As will be explained below in more detail, the control circuit 22 controls to decelerate the motor C which is the driving source for the end-sealing mechanism 20, to stop for the necessary number of cycles, and then start the motor C with gradual acceleration, finally followed by synchronization of the two motors A and B for the speeds and phases.

Fig. 1 shows an example of a control circuit to be used in a packaging article inclusion-proofing device according to the embodiment of this invention, wherein various data to be supplied from outside are adapted to be operationally processed through a central processing unit (CPU) in the above circuit to give a necessary control command to the motor C for achieving end-sealing. The control circuit 22 has an operational block 50 comprising an operational section for calculating the cycle stop timing Q₀ and an operational section for calculating gradual acceleration/deceleration coefficient of the motor C, and data including (1) the cut pitch for cutting the packaging material 16, (2) the height of the packaging article 10, and (3) the distance L from the original point of feeding the packaging article 10 to the end-sealing mechanism 20 are inputted to this operational block 50 by means of a keyboard and the like.

In the above operational block 50, the timing Q₀ for stopping the end-sealing cycle and an acceleration/deceleration coefficient of the motor C for driving the end-sealing mechanism 20 are calculated. Further, orientation of the sealers 40 in the end-sealing mechanism 20 is also achieved by the operational block 50 for stopping them at positions where they may be free from contact with the tubular packaging material 16. The term "acceleration/deceleration coefficient of the motor C" used herein is intended to mean the degree of smoothness in the motion of the motor when it is accelerated or decelerated (i.e. the degree that the motor rotates slowly or rapidly), which is defined by a coefficient of, for example, 1 to 9. Accordingly, if the coefficient of the motor is set at 5, the deceleration for stopping the motor C or starting it with acceleration will be achieved in the range of 180° [360° (a full rotation of the reference timing pulse generating means S₁) x 5/10]. Also, since the motor C operates decelerated stopping and accelerated starting, each of the above sealers 40 makes a turn which corresponds to 1/2 rotation of the reference timing pulse generating means S₁, i.e. a rotation of only 90° depending on the above condition. The rotation angle of the reference timing pulse generating means S₁ to those of the sealers 40 constantly keep a ratio of 1/2.

Incidentally, the acceleration/deceleration coefficient of the motor C and the cycle stop timing Q₀ are adapted to be inputted to the above operational block 50, as necessary, as correction data. Thus, as shown in Fig. 1, the operational block 50 calculates the inputted data including the cut pitch for cutting the packaging material 16, the height of the packaging article 10 and the distance L from the original point of feeding the packaging articles 10 to the end-sealing mechanism 20 to give a control command to the inclusion-proofing control block 52.

The deviation detection signal from the deviation detecting sensor 42 is inputted to one of the terminals of an AND circuit 60 through an input port 54. The reference timing provided from the above reference timing pulse generating means S₁ and the deviation timing to be preset using a keyboard and the like are inputted to a timing setting section 58. Then, the timing setting section 58 outputs a deviation timing signal defined based on the reference timing signal to the other terminal of the above AND circuit 60. This AND circuit 60 outputs a signal of "deviation present" to a shift setting means 56, provided that the deviation detection signal coincides with the deviation timing signal to be inputted through the timing setting section 58.

To this shift setting means 56, the number of shifts to be defined by means of a keyboard and the like is inputted, and upon receipt of the "deviation present" signal, the shift setting means 56 is allowed to wait for a period based on the required number of shifts and then outputs a command signal to the inclusion-proofing control block 52. Thus, the inclusion-proofing control block 52 gives a control command to the motor C for achieving end-sealing through a servo amplifier 62 to stop under gradual deceleration or start with gradual acceleration. Incidentally, when the motor C stops, a control is achieved to stop the above pair of rotary sealers 40 in the end-sealing mechanism 20 at positions (see Fig. 2) where they are free from contact with the tubular packaging material 16 based on the value calculated in the operational block 50 from the inputted data including the cut pitch for cutting the packaging material 16, the height of the packaging article 10, and the distance from the original point of feeding the packaging article 10 to the end-sealing mechanism 20, as described above.

Further, a rejection control section 23 is attached to the above control circuit 22. This rejection control section 23 is adapted to compare the preliminarily inputted data including the shift numbers and the like with the "deviation present" signal outputted from the AND circuit 60 to actuate, for example, a solenoid valve 25 to operate a thrusting means such as an air cylinder (not shown). Accordingly, any defective package with no end sealing applied thereto as a result of the deviation will be rejected to the outside of the line.

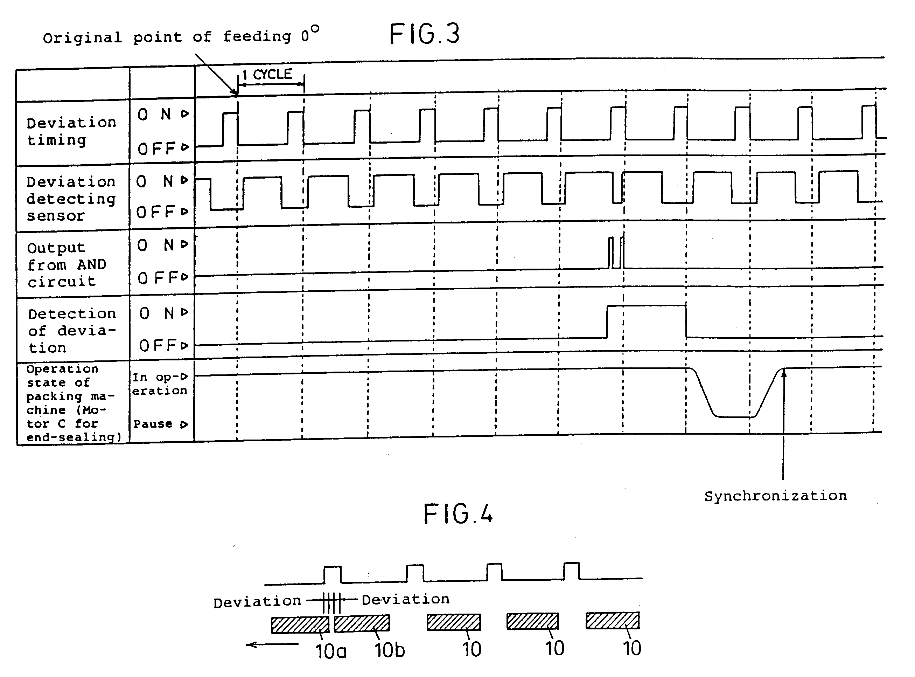

Next, the function of the inclusion-proofing device according to the embodiment having such constitution will be described. As described above, deviation timing signals based on the reference timing signals are outputted in the form of a pulse wave as shown in Fig. 3 from the timing setting section 58 shown in Fig. 1. This deviation timing is set for an angle range in which inclusion of a packaging article 10 by the above pair of sealers 40 in the above end-sealing mechanism is supposed to happen (an angle based on the original point of feeding in the encoder in the reference timing pulse generating means S₁).

The deviation detection signals from the deviation detecting sensor 42 are also outputted in the form of a pulse wave as shown in Fig. 3. When the packaging article 10 having been fed into the tubular packaging material 16 is located at a regular position relative to the seal timing of the end-sealing mechanism 20, the above packaging article 10 locates inbetween the deviation timing pulses, i.e. the packaging article 10 has not deviated from the regular position, as shown in Fig. 4. In such a situation, the deviation timing signal does not coincide with the deviation detection signal, as can be seen from Fig. 3. Accordingly, the inclusion-proofing control block 52 is not actuated.

Therefore, when a deviation of the packaging article 10 occurs to a degree which is intolerable relative to the above deviation timing, as shown in Fig. 4, the upstand of the deviation timing signal comes to coincide with that of the deviation detection signal, as shown in Fig. 3, whereby the AND circuit 60 in the above control circuit 22 outputs a "deviation present" signal to the shift setting means 56, provided that the deviation timing signal from the timing setting section 58 should coincide with the deviation detection signal from the deviation detecting sensor 42, as shown in Fig. 3.

Thus, the shift setting means 56 outputs a control command to the inclusion-proofing control block 52 to stop the motor C for achieving end-sealing after waiting for a period corresponding to the preset number of shifts. Namely, the inclusion-proofing control block 52 gives a control command, after waiting only for one cycle since the deviation detecting sensor 42 has detected a deviation as shown in Fig. 3 when the number of shifts as input data has been preset at one, to the motor C for achieving end-sealing to stop with gradual deceleration through the servo amplifier 62. In the above situation, two packaging articles 10a and 10b successively deviate from the regular positions relative to the deviation timing, as can be seen from Fig. 4.

However, in the above situation, the rear end of the preceding packaging article 10a and the fore end of the succeeding packaging article 10b show deviation merely to be closer to each other, and the line for end-sealing and cutting which is common to both packaging articles 10a and 10b is secured. Accordingly, in such situation, there is no need of stopping the end-sealing mechanism 20 for two cycles corresponding to the two packaging articles 10a and 10b, but a stopping for one cycle corresponding to one packaging article 10 may be enough.

After this stopping of the cycle, the motor C for achieving end-sealing is started with gradual acceleration to allow the rotation speed and phase of the sealers 40 in the above end-sealing mechanism 20 to be synchronized with the speed of feeding the above packaging article 10 and the phase thereof and further with the speed of delivering the packaging material 16 and the phase thereof.

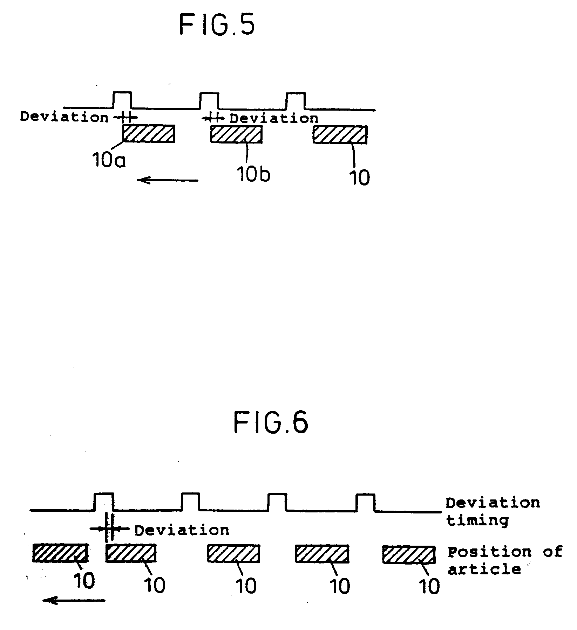

It should be noted that even when two successive packaging articles should deviate from the regular positions, but if each of the fore ends of the preceding packaging article 10a and the succeeding packaging article 10b show deviation relative to the deviation timing as illustrated in Fig. 5, the line for end-sealing and cutting the packaging material 16 is required independently for these two packaging articles. Accordingly, in such situation, the end-sealing mechanism 20 is stopped for two cycles corresponding to the two packaging articles 10a and 10b. Further, when the fore end of a packaging article 10 shows deviation relative to the deviation timing as shown in Fig. 6, the end-sealing mechanism 20 is controlled to stop for one cycle corresponding to the packaging article 10.

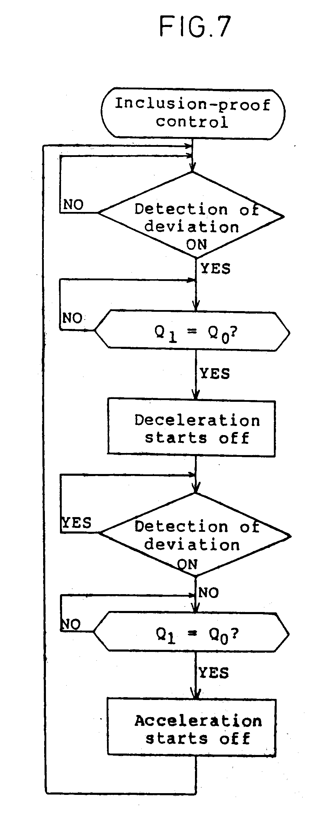

Now, the flow of control will be described referring to the flow chart shown in Fig. 7. Upon identification of any deviation of a packaging article 10 by the deviation detecting sensor 42, the motor C for driving the end-sealing mechanism 20 is allowed to wait until the present location Q₁ of the packaging article 10 under feeding to be known from the reference timing pulse generating means S₁ agrees with the cycle stop timing Q₀, and then decelerated. Upon starting of gradual deceleration of the motor C, the sealers 40 are controlled to make a 180° turn in terms of an angle conversion of the encoder in the reference timing pulse generating means S₁, and as shown with the hatching in Fig. 2, to stop at the point when the sealers 40 have reached the positions where they are free from contact with the tubular packaging material 16, i.e. where the sealers 40 have made a 90° turn from their position of engagement. (In the present specification, the above control is achieved when the cycle stop timing Q₀ has been set at the position of engagement of the sealers 40 and the original point P of transferring the packaging article 10 from the conveyor 12, provided that the acceleration/deceleration coefficient described above has been set at 5. In such situation, although the sealers 40 are controlled to stop at the point where they have made a 180° turn in terms of an angle conversion of the encoder in the reference timing pulse generating means S₁, i.e. 1/2 cycle, the shift angle of the sealers 40 themselves will be only 90° because of the decelerated stopping.)

It should be noted that the stop angle of the sealers 40 to be achieved as a result of the decelerated stopping will automatically be set to be at positions such that they are free from contact with the above tubular packaging material 16, since the preset values of the above acceleration/deceleration coefficient and the cycle stop timing Q₀ are calculated from the inputted data to be inputted by means of a keyboard and the like including the cut pitch for cutting the packaging material 16, the height of the article, etc., whereby contact between the sealers 40 with the packaging material 16 can be obviated when the sealers 40 are stopped with deceleration to prevent undesired burning of the packaging material 16. Further, the above conveyor 12 is operated at a steady state speed and with the phase irrespective of the decelerated stopping or accelerated starting of the above motors A and B.

The deviation detecting sensor 42 confirms if there is a deviation in any succeeding packaging article 10. If it is confirmed that there is no deviation, the motor C is allowed to wait until the present location Q₁ of the packaging article 10 under feeding agrees with the cycle stop timing Q₀ and then started. This motor C is gradually accelerated according to a preset acceleration coefficient, and the control is completed when the steady state speed and phase of the motor A for driving the feed conveyor 12 are synchronized with those of the motor B for delivering the packaging material 16.

As has been described heretofore, according to the device of this embodiment, the motor C for driving the end-sealing mechanism 20, after it is allowed to wait until the present location Q₁ of the packaging article 10 under feeding agrees with the cycle stop timing Q₀, is stopped under gradual deceleration. After a duration of stopping for a necessary period, the motor C is started with acceleration. Namely, the motor C does not make any abrupt stopping or starting, if a deviation of a packaging article 10 should be detected, so that neither vibration nor shock may suddenly be generated in the system itself and that deviation of the packaging article 10 can effectively be prevented. Moreover, since the sealers 40 are allowed to locate at positions where they are completely free from contact with the tubular packaging material 16 when they are stopped, accidents such as melting or burning of the packaging material 16 to be cause by the contact with the sealers 40 can effectively be prevented.

## Claims

1. A packaging machine with a packaging article inclusion-proofing device for an end-sealing mechanism, comprising
a motor (A) for driving a conveyor (12) for feeding packaging articles with a predetermined space therebetween into a packaging material (16),
a motor (B) for driving a series of rolls (18, 34) which deliver downstream the packaging material (16) being formed into a tube,
a motor (C) for driving an end-sealing mechanism (20) for achieving end-sealing of the tubular packaging material (16) in the crosswise direction relative to the line of feed,
a deviation detecting sensor (42) disposed at a predetermined position upstream of the end-sealing mechanism (20) for detecting deviation of packaging articles (10) inserted into the tubular packaging material (16) relative to the portion to be end-sealed, and
means for stopping and starting the motor (C) during a detected deviation of the packaging articles (10),
a reference timing pulse generating means (S1) which generates predetermed reference timing pulses for the timing of feeding the packaging articles (10) from said conveyor (12), and
control means (50, 52, 54, 56, 58, 60) operating to detect a deviation on the basis of said reference timing pulse generating means (S1) and a deviation detecting signal furnished from said deviation detecting sensor (42) for stopping the motor (C) for driving the end-sealing mechanism with gradual deceleration and continuing the operation of the motor (A) for driving said conveyor (12) and of the motor (B) for delivering the packaging material upon detection of a deviation of a packaging article and starting the motor (C) by gradual acceleration, as soon as no further deviation has been detected, until the speed and phase thereof is synchronized with those of said motor (A) and of said motor (B).

2. A packaging machine according to Claim 1, provided with a controlling means for stopping a pair of sealers (40) at the positions where they are free from contact with said packaging material (16), when the motor (C) for achieving end-sealing is stopped with gradual deceleration.

3. A packaging machine according to Claim 2, provided with a control block for stopping said pair of sealers (40) in said end-sealing mechanism (20) at predetermined positions based on the value calculated from the inputted data including the cut pitch for cutting the packaging material (16) and the height of the packaging article (10).

## Patentansprüche

1. Verpackungsmaschine mit einer Erfassungs-Prüfvorrichtung für eine Endsiegelvorrichtung, mit
einem Motor (A) zum Antrieb eines Transportbandes (12) zur Zufuhr von Verpackungsgegenständen mit einem vorbestimmten Abstand dazwischen in ein Verpackungsmaterial (16), einem Motor (B) zum Antrieb einer Reihe von Rollen (18, 34), die das Verpackungsmaterial (16) zur Bildung eines Schlauches in Ausgangsrichtung transportieren,
einem Motor (C) zum Antrieb einer Endsiegelvorrichtung (20) zur Durchführung einer Endsiegelung des schlauchförmigen Verpackungsmaterials (16) in Querrichtung relativ zur Transportrichtung,
einem an einer vorbestimmten Lage eingangsseitig der Endsiegelvorrichtung (20) angeordneten Abweichungserfassungssensor (42) zum Erfassen einer Abweichung von in das schlauchförmige Verpackungsmaterial (16) eingeführten Verpackungsgegenständen (10) relativ zu dem endzusiegelnden Bereich, und einer Vorrichtung zum Anhalten und Starten des Motors (C) während einer erfaßten Abweichung des Verpackungsgegenstandes (10),
einem Referenztaktimpulsgenerator (S1), der vorbestimmte Referenztaktimpulse zum Takten der Zufuhr der Verpackungsgegenstände (10) vom Transportband (12) erzeugt, und einer Steuervorrichtung (50, 52, 54, 56, 58, 60), die eine Abweichung auf der Grundlage des Referenztaktimpulsgenerators (S1) und eines vom Abweichungserfassungssensor (42) gelieferten Abweichungserfassungssignals feststellt, den Motor (C) zum Antrieb der Endsiegelvorrichtung bei Feststellung einer Abweichung eines Verpackungsgegenstandes mit allmählicher Abbremsung stoppt, während der Betrieb des Motors (A) zum Antrieb des Transportbandes (12) und des Motors (B) zur Zufuhr des Verpackungsmaterials fortgesetzt wird, und den Motor (C) unter allmählicher Beschleunigung startet, sobald keine weitere Abweichung mehr festgestellt wird, bis dessen Geschwindigkeit und Phase mit denjenigen des Motors (A) und des Motors (B) synchronisiert ist.

2. Verpackungsmaschine nach Anspruch 1, enthaltend eine Steuervorrichtung zum Anhalten eines Paars von Siegelelementen (40) in solchen Lagen, in denen sie außer Kontakt mit dem Verpackungsmaterial (16) sind, wenn der Motor (C) zur Endsiegelung unter allmählicher Abbremsung gestoppt wird.

3. Verpackungsmaschine nach Anspruch 2, enthaltend einen Steuerblock zum Anhalten des Paars von Siegelelementen (40) in der Endsiegelvorrichtung (20) in vorbestimmten Positionen auf der Grundlage eines aufgrund der eingegebenen Daten einschließlich des Schneideabstandes zum Schneiden des Verpackungsmaterials (16) und der Höhe des Verpackungsgegenstandes (10) errechneten Wertes.

## Revendications

1. Machine à empaqueter équipée d'un dispositif de vérification d'inclusion pour un mécanisme de scellement d'extrémité, comprenant :
un moteur (A) pour entraîner un convoyeur (12) servant à amener des articles à empaqueter, avec un écartement prédéterminé entre eux, dans un matériau d'empaquetage (16),
un moteur (B) pour entraîner une série de rouleaux (18,24) qui amène en aval le matériau d'empaquetage (16) conformé en tube,
un moteur (C) pour entraîner un mécanisme de scellement d'extrémité (20) servant à réaliser le scellement d'extrémité du matériau d'empaquetage conformé en tube (16) dans la direction transversale par rapport à la ligne d'alimentation,
- un capteur de détection de déviation (42) placé en une position prédéterminée en amont du mécanisme de scellement d'extrémité (20) servant à détecter la déviation d'articles à empaqueter (10) insérés dans le matériau d'empaquetage conformé en tube (16) par rapport à la partie devant faire l'objet de scellement d'extrémité,
des moyens pour arrêter et lancer le moteur (C) durant une déviation détectée des articles à empaqueter (10),
un moyen de génération d'impulsions de temporisation de référence (S1) qui génère des impulsions de temporisation de référence prédéterminés pour la temporisation de l'alimentation des articles à empaqueter (10) depuis ledit convoyeur (12), et
des moyens de contrôle (50,52,54,56,58,60) servant à détecter une déviation sur la base dudit moyen de génération d'impulsions de temporisation de référence (S1) et d'un signal de détection de déviation envoyé par ledit capteur de déviation (42) afin d'arrêter le moteur (C) servant à entraîner le mécanisme de scellement d'extrémité par une décélération graduelle et de continuer à faire tourner le moteur (A) servant à entraîner ledit convoyeur (12) ainsi que le moteur (B) servant à alimenter le matériau d'empaquetage (20), en cas de détection d'une déviation d'un article à empaqueter, et de relancer le moteur (C) par une accélération graduelle, aussitôt qu'aucune autre déviation n'a été détectée, jusqu'à ce que la vitesse et la phase de ce moteur soient synchronisées avec celles dudit moteur (A) et dudit moteur (B).

2. Machine à empaqueter selon la revendication 1, pourvue d'un moyen de contrôle pour arrêter une paire de dispositifs de scellement (40) dans les positions où ils ne sont pas en contact avec ledit matériau d'empaquetage (16), lorsque le moteur (C) pour réaliser le scellement d'extrémité est arrêté par une décélération graduelle.

3. Machine à empaqueter selon la revendication 2, pourvue d'un bloc de commande pour arrêter ladite paire de dispositifs de scellement (40) dans ledit mécanisme de scellement d'extrémité (20) en des positions prédéterminées basées sur la valeur calculée à partir des données entrées, y compris le pas de découpe pour découper le matériau d'empaquetage (16) et la hauteur de l'article à empaqueter (10).
